# EUROPÄISCHE PATENTSCHRIFT

(11) **EP 1 843 889 B1**
(45) Veröffentlichungstag und Bekanntmachung des Hinweises auf die Patenterteilung: **09.07.2008**
(21) Anmeldenummer: 05774405.4
(22) Anmeldetag: 08.08.2005
(51) Int. Cl.: B29C 51/08, B29C 51/10, B29C 59/00

(54) **VERFAHREN UND VORRICHTUNG ZUR HERSTELLUNG EINER THERMOGEFORMTEN UND MIT EINER OBERFLÄCHENNARBUNG VERSEHENEN KUNSTSTOFFFOLIE**
METHOD AND DEVICE FOR PRODUCING A THERMOFORMED PLASTIC FILM HAVING AN EMBOSSED SURFACE
PROCEDE ET DISPOSITIF POUR PRODUIRE UN FILM PLASTIQUE THERMOFORME POURVU D'UN GRAINAGE DE SURFACE

(30) Priorität: 08.01.2005 DE 102005001099
(43) Veröffentlichungstag der Anmeldung: 17.10.2007
(73) Patentinhaber: FRIMO Group GmbH, 49504 Lotte (DE)
(72) Erfinder: BERGERS, Helmut, 47929 Grefrath (DE); LAUSE, Jürgen, 49205 Hasbergen (DE)
(74) Vertreter: Moldenhauer, Herbert
(86) Internationale Anmeldenummer: PCT/EP2005/008572
(87) Internationale Veröffentlichungsnummer: WO 2006/072269

(56) Entgegenhaltungen:
- US-A- 4 584 157
- PATENT ABSTRACTS OF JAPAN Bd. 014, Nr. 026 (M-921), 18. Januar 1990 (1990-01-18) & JP 01 264836 A (KONAN TOKUSHU SANGYO KK), 23. Oktober 1989 (1989-10-23)
- PATENT ABSTRACTS OF JAPAN Bd. 1996, Nr. 12, 26. Dezember 1996 (1996-12-26) & JP 08 207158 A (KASAI KOGYO CO LTD), 13. August 1996 (1996-08-13)

## Beschreibung

### Technisches Gebiet

Die Erfindung betrifft ein Verfahren und eine Vorrichtung zur Herstellung einer thermogeformten und mit einer Oberflächennarbung versehenen Kunststofffolie, bei dem eine bis zur plastischen Verformbarkeit erwärmte, ebene Kunststofffolie aufeinander folgend thermogeformt, mit der Oberflächennarbung versehen und durch anschließende Abkühlung verfestigt wird.

### Stand der Technik

Derartige Kunststofffolien werden als Bezugstoffe für Armaturentafeln und ähnliche Produkte benötigt. Die Kunststofffolien werden dabei in einem ersten Schritt in ebener Gestalt hergestellt und hierbei zugleich mit einer Oberflächennarbung versehen. Anschließend werden sie nach erneuter Erwärmung und an einer örtlich getrennten Stelle unter Verwendung von Thermoformwerkzeugen in eine dreidimensionale Gestalt überführt. Es wird bemängelt, dass die zuvor erzeugte Oberflächennarbung während dieser nachfolgenden Thermoformung, die einem Tiefziehprozess ähnlich ist, der an einer zuvor auf Umformtemperatur erwärmten Kunststofffolie vorgenommen wird, eine Verzerrung erfährt, die insbesondere im Bereich von vorstehenden Ecken und Kanten unschön in Erscheinung tritt. Sie kann an exponierten Stellen sogar dazu führen, dass die ursprüngliche Narbung dort ganz verloren geht und dass dort Glanzstellen das Bild der Narbung unterbrechen. Die US 4584157, JP 01264836 und JP 08207158 zeigen beispielhaft den Stand der Technik.

### Darstellung der Erfindung

Der Erfindung liegt die Aufgabe zu Grunde, ein Verfahren der eingangs genannten Art derart weiter zu entwickeln, dass es gelingt, bei niedrigen Kosten die Oberflächennarbung der thermogeformten Kunststofffolie willkürlich zu gestatten. Der Thermoformprozess soll insbesondere nicht mehr zu einer Verzerrung der Oberflächennarbung führen können.

Diese Aufgabe wird erfindungsgemäß bei einem Verfahren nach dem Oberbegriff des Patentbegehrens mit den kennzeichnenden Merkmalen von Anspruch 1 gelöst. Auf vorteilhafte Ausgestaltungen nehmend die Unteransprüche Bezug.

Bei dem erfindungsgemäßen Verfahren zur Herstellung einer thermogeformten und mit einer Oberflächennarbung versehenen Kunststofffolie ist es vorgesehen, dass dass die auf ihre Umformtempreratur erwärmte Kunststofffolie an ein gleichfalls auf ihre Umformttemperatur erwärmtes Positivwerkzeug angeblasen und von diesem bis zum oberflächenbündigen Anliegen angesogen wird, dass die Kunststofffolie mittels des Positivwerkzeugs in ein auf eine Temperatur von 40 bis 100 °C erwärmtes Negativwerkzeug überführt wird mit einer Oberfläche, die zusätzlich die Oberflächennarbung in negativer Form enthält, dass der verbleibende Zwischenraum zwischen der Oberflächennarbung und der Vorderseite der Kunststofffolie über zumindest einen Kanal druckentlastet wird, dass die Kunststofffolie durch eine Beaufschlagung Ihrer Rückseite mit einem aus dem Positivwerkzeug austretenden, druckbeauschlagten Strömungsmittel in die Oberflächennarbung des Negativwerkzeugs eingepresst und vorderseitig mit dessen Oberflächennarbung versehen wird, dass das Positivwerkzeug geringfügig von der Rückseite der Kunststofffolie abgehoben wird und dass die Kunstofffolie durch Einleiten eines kühlen Strömungsmittels in den so gebildeten Spalt auf eine unter ihrer Umformtemperatur liegende Temperatur abgekühlt und nachfolgend entnommen wird. Das Negativvwerkezug ist zweckmäßig ganz frei von in Richtung der Oberfläche offenen Poren. Es lässt sich dadurch sehr leicht reinigen und ist auch für die Verarbeitung von Kunststofffolien geeignet, aus denen unter den Bedingungen der Verarbeitung Fremdstoffe austreten können, beispielsweise Weichmacher. Dies ist beispielsweise bei PVC-Folien der Fall.

Das Negativwerkzeug wird zweckmäßig auf galvanischem Wege erzeugt. Es lässt sich nach dieser Methode problemlos mit dem Negativ einer jeden gewünschten Oberflächennarbung versehen, beispielsweise mit einer Ledernarbung beliebiger Struktur. Die dazu nötige Vorlage kann unmittelbar von einem Originalleder abgenommen worden sein und in allen Teilbereichen dessen natürliche Unregelmäßigkeiten enthalten, d.h. auch im Bereich von vorspringenden Ecken und Kanten. Eine dreidimensionale Raumform, die beispielsweise Armaturentafeln zur Verwendung in Kraftfahrzeugen benötigen, lässt sich auf diesem Wege ebenfalls problemlos realisieren. Eine Polierung der Oberfläche im Anschluß an deren Herstellung bereitet keine Schwierigkeiten.

Das Negativwerkzeug kann auch aus porösem oder unporösem Vollmaterial gefertigt werden, wobei die Oberflächennarbung durch einen Fräs- oder Ätzprozess darin eingebracht wird.

Die Druckentlastung kann über mindestens einen Kanal erfolgen, der durch eine Bohrung mit einem Durchmesser von 2 bis 50 mm gebildet sein kann. Er mündet zweckmäßig im nicht sichtbaren Bereich der erhaltenen, thermogeformten und mit einer Oberflächenprägung versehenen Kunststofffolie oder in einem Bereich, der am Fertigteil verdeckt oder nachfolgend ausgeschnitten ist. Die Bohrung kann somit verhältnismäßig groß dimensioniert sein, was die Herstellung vereinfacht. Sie lässt sich außerdem bei entsprechendem Bedarf leicht reinigen, beipielsweise durch einen Druckluftstoß, und die Durchströmbarkeit gegebenenfalls auch automatisch kontrollieren, beipielsweise durch eine Messung des Druckanstiegs im Inneren beim Einleiten eines solchen Druckluftstoßes.

Falls Kunststofffolien zu Verarbeitung gelangen, die beim Erreichen der Umformtemperatur besonders labil sind, hat es sich bewährt, die Mündung eines solchen Kanals zu verengen oder mit sekundären Abstützmitteln zu versehen, beispielsweise mit Entlüftungseinsätzen aus dem Formenbau, um ein Eindringen und Anbacken von Bestandteilen der Kunststofffolien zu verhindern. Die Enlüftungseinsätze weisen sich parallel zueinander erstreckende Trag- oder Gitterstäbe auf, die die umliegenden Oberlächen des Negativwerkzeugs oberflächenbündig ergänzen. Eine Verwendung von luftdurchlässigen Sintereinsätzen ist gleichfalls möglich. Sie müssen auf der der Kunststofffolie zugewandten Seite nicht mit einer negativen Oberflächennarbung versehen sein, weil der betreffende Bereich der Kunststofffolie am Fertigteil nicht sichtbar, im Allgemeinen sogar ausgeschnitten und/oder später durch Armaturen verdeckt ist. Wichtig ist lediglich eine so weitgehende Abstützung der auf ihre Umformtemperatur erwärmten Kunststofffolie, dass verhindert wird, dass sich durch die Anpressung an das Negativwerkzeug Bestandteile daraus lösen und den Kanal verstopfen können.

Es ist nicht unbedingt erforderlich, dass der Kanal immer in die Atmosphäre mündet. Er kann statt dessen auch mit einer Vakuumquelle verbindbar sein, um die Druckentlastung und damit zugleich die Herstellung der Oberflächennarbung zu beschleunigen und/oder mit einer Druckluftquelle, um die Abkühlung und Entformung der fertiggestellten Kunststoffolie zu beschleunigen.

Falls der Kanal mit einer Vakuumquelle verbindbar ist, hat es sich für die Herstellung besonders fein strukturierter Oberflächennarbungen bewährt, eine Vakuumquelle zu verwenden, die es erlaubt, ein sehr hohes Vakuum zu erzeugen. Besonders gute Abformungsergebnisse werden mit einem Vakuum von mehr als -0,9 bar erhalten.

Durch die Prägung der Oberflächennarbung erst im Anschluß an die vorausgegangenen Thermoformung der Kunststofffolie besteht die Möglichkeit, die Oberflächennarbung in allen Teilbereichen nach freiem Ermessen und damit willkürlich zu gestalten. Unkontrollierbare Verzerrungen der Oberflächennarbung im Bereich von vorspringenden Ecken und Kanten werden dadurch ausgeschlossen.

Unter einer Kunststofffolie wird im Rahmen der vorliegenden Erfindung irgend eine der einschlägig verwendeten, thermisch erweichbaren Folien aus polymerem Werkstoff verstanden, beispielsweise auch aus TPU, ABS oder PVC.

Ein weiterer Vorteil der Erfindung besteht darin, dass es nicht mehr erforderlich ist, eine Vielzahl unterschiedlich genarbter Kunststofffolien beim Verwender zu bevorraten, um den einzelnen Anforderungen von dessen Kunden jeweils gerecht werden zu können. Es genügen vielmehr wenige, ebene Standardfoliensorten, gegebenenfalls in verschiedenen Farben, für eine Vielzahl von unterschiedlich genarbten Ausführungen. Die erforderliche Art der Narbung wird dabei mit dem speziell angefertigten Thermoformwerkzeug erst im unmittelbaren Zusammenhang mit der Abarbeitung eines Auftrags darauf übertragen. Die Lagerhaltung wird hierdurch sehr entlastet. Verwechslungen des Narbungsbildes können kaum noch auftreten.

Es hat sich als zweckmäßig erwiesen, wenn die Kunststofffolie während der Durchführung des erfindungsgemäßen Verfahrens in einem Spannrahmen eingespannt und darin erwärmt, zunächst dreidimensional thermogeformt, d.h. in die Gestalt der Armaturentafel überführt wird, und wenn sie danach in einem Prägeverfahren dreidimensional mit der zumeist lederähnlichen Oberflächennarbung versehen wird. Das Handling der Kunststofffolie wird durch die Verwendung eines Spannrahmens sehr vereinfacht. Eine Automatisierung beim Aufnehmen neuer Kunststofffolien und beim Ablegen bereits thermogeformter und geprägter Teile ist dadurch besonders einfach realisierbar.

Die Kunststofffolie wird im Anschluss an ihre Erwärmung zunächst an ein auf die Umformtemperatur der Kunststoffolie erwärmtes Positivwerkzeug angeblasen und danach von diesem bis zum oberflächenschlüssigen Anliegen angesogen und dabei zugleich auf dessen Oberfläche unverrückbar festgelegt, um mittels des Positivwerkzeugs nachfolgend und ohne nennenswerten Temperaturverlust in das erwärmte Negativwerkzeug überführt zu werden.

Eine solche Kunststofffolie besitzt in einem hinreichend thermoplastisch erweichten Zustand nur eine geringe mechanische Beständigkeit. Durch das Anschmiegen und nachfolgende Festlegen der Kunststoffolie an dem Positivwerkzeug durch Ansaugen lässt sie sich trotz ihrer geringen mechanischen Beständigkeit nach dem Erwärmen sehr schnell und zielgerichtet in das Negativwerkzeug überführen und mit der gewünschten Oberflächennarbung versehen.

Um die Kunststofffolie nach ihrer Überführung in das Negativwerkzeug unter Verwendung eines auf ihre Rückseite einwirkenden Strömungsmittels mit der erforderlichen Kraft an das Negativwerkzeug anpressen zu können, ist es erforderlich, dass die Kunststofffolie gegenüber dem Negativwerkzeug und dem Positivwerkzeug randseitig abgedichtet wird und dass der verbleibende Zwischenraum zwischen der Kunststoffolie und dem Negativwerkzeug über zumindest einen mit der Oberflächennarbung des Negativwerkzeugs in Verbindung stehenden Kanal druckentlastet oder evakuiert wird, der das Negativwerkzeug zweckmäßig an einer am Fertigteil nicht sichtbaren Stelle durchdringt. Hierdurch wird erreicht, dass die während der bestimmungsgemäßen Verwendung in der Anfangsphase der Anformung der Kunststofffolie zwischen dieser und dem Negativwerkzeug eingeschlossene Luft atmospärichen Drucks in die Atmosphäre entweichen oder abgesaugt werden kann, ohne den Prozess der Oberflächenprägung zu behindern. Dabei geht die Erfindung aus von der Erkenntnis, dass sich die mit einer Oberflächennarbung versehene, d.h. unebene Oberfläche des Negativwerkzeugs, und die anfänglich glatte Oberfläche einer Kunststofffolie nicht von selbst derart dicht aneinander anzulegen vermögen, dass Querströmungen der eingeschlossenen Luft völlig ausgeschlossen sind. Die im Zwischenraum zwischen dem Negativwerkzeug und der Vorseite der Kunststofffolie eingeschlossene Luft kann dadurch unter der Einwirkung der beim Narbungsprozess auf ihre Rückseite einwirkenden Druckluft aus dem Positivwerkzeug über den Kanal entweichen. Zumeist werden mehrere derartige Kanäle vorgesehen und bedarfsweise mit einer Vakuumquelle verbunden, was die Druckentlastung beschleunigt. Das Vakuum kann in kritischen Fällen -0,90 bar und mehr erreichen.

Auch wenn nur ein einziger Kanal an der am weitesten zurückliegenden Stelle des Negativwerkzeugs vorgesehen ist, wird die enthaltene Luft vor der Übergabe der thermogeformten Kunststofffolie in das Negativwerkzeug im technisch erfoderlichen Maße aus dem Zwischenraum verdrängt oder abgesogen und hierdurch eine gute Übertragung der Oberflächennarbung von dem Negativwerkzeug auf die thermogeformte Kunststofffolie erhalten. Dennoch werden in der Praxis aus Gründen der Prozesssicherheit gewöhnlich an allen technisch möglichen Stellen der später nicht sichtbaren Bereiche der Kunststofffolie entsprechende Kanäle in dem Negativwerkzeug vorgesehen, die miteinander in Verbindung stehen und die gemeinsam mit der Atmospäre, einer Vakuum- und/oder einer Druckluftquelle verbindbar sind.

Die Kunststofffolie wird zur Übergabe vom erhitzten Positivwerkzeug zum Negativwerkzeug zwecks Anbringung der Narbung rückseitig mit einem druckbeaufschlagten Stömungsmittel beaufschlagt, beispielsweise mit Druckluft. Drücke von 2 bis 4 bar sind problemlos erreichbar und hinreichend hoch, um die zuvor thermisch in einen hochgradig plastisch verformbaren Zustand überführte Kunststofffolie in die Oberflächennarbung des Negativwerkzeugs einzuschmiegen und deren Abbild auf die Kunststofffolie zu übertragen. Um die dabei freigesetzten Kräfte aufzufangen, werden die beiden Werkzeuge während der Druckbeaufschlagung miteinander verriegelt.

Um eine fast 100% -ige Übertragung der Narbung aus dem Negativwerkzeug auf die Kunststofffolie zu erreichen, ist es zweckmäßig, dass der verbleibende Zwischenraum zwischen der Kunststofffolie und dem Negativwerkzeug über zumindest einen Kanal evakuiert wird, der das Negativwerkzeug in einem Bereich der Kunststofffolie durchdringt, der im Fertigteil nicht sichtbar ist.

Das Negativwerkzeug wird zur Erzielung einer guten Abbildung der Oberflächennarbung auf üblichen Kunststofffolien zur Verwendung auf Armaturentafeln auf eine Temperatur von 40 bis 100°C erwärmt, bevorzugt auf eine Temperatur von 40 bis 80 °C. Die im Einzelfalle optimalen Temperaturen sind bei Bedarf mit Hilfe von Versuchen leicht bestimmbar.

Das die Form der Armaturentafel wiedergebende Positivwerkzeug wird zweckmäßig auf eine erhöhte Temperatur gebracht, um nachteilige Effekte beim Thermoformen und Prägen einer Kunststofffolie zu vermeiden. Die Temperatur soll mit der Umformtemperatur der zu verarbeitenden Kuststofffolie im wesentlichen übereinstimmen. Sie beträgt bei der Verarbeitung von Kunststofffolien aus TPO zweckmäßig 170 bis 220°C, bei der Verarbeitung von Kunststofffolien aus PVC zweckmäßig 150 bis 200°C. Falls der für die Herstellung der Kunststofffolie verwendete Werkstoff einen Erweichungsbereich hat, wie z.B. die vorgenannten Werkstoffe, dann hat es sich als zweckmäßig erwiesen, mit der Temperatur an die obere Grenze des Erweichungsbereichs zu gehen, um eine gute Abbildung feiner Narbungsstrukturen zu erhalten. Im Einzelfalle kann es zweckmäßig ein, die am besten geeigneten Temperaturen durch Versuche zu ermitteln und dann andauernd anzuwenden.

Die Erfindung betrifft ferner eine Vorrichtung, zur Durchführung des oben beschriebenen Verfahrens, umfassend ein dreidimensional profiliertes Negativwerkzeug mit einer negativen Oberflächennarbung, das zweckmäßig an den am Fertigteil nicht sichtbaren Stellen des Profils von zumindest einem Kanal durchdrungen ist, ein damit in Eingriff bringbares, dreidimensional profiliertes. Positivwerkzeug mit einer glatten Oberfläche, die von im wesentlichen gleichmäßig verteilten Steuerkanälen durchdrungen ist, eine erste Hilfseinrichtung, durch die eine thermoplastische Kunststofffolie erwärmbar und in den Zwischenraum zwischen dem Negativ- und Positivwerkzeug einbringbar ist, eine zweite Hilfseinrichtung, durch die der Abstand der beiden Werkzeuge veränderbar ist und eine dritte Hilfseinrichtung, durch die die Kanäle und Steuerkanäle mit der Atmospäre, einem Vakuum und/oder einer Quelle für ein druckbeaufschlagbares Strömungsmittel verbindbar sind. Eine solche Vorrichtung lässt sich verhältnismäßig einfach herstellen. Ihre Verwendung in der Industrie wird dadurch begünstigt.

Als zweckmäßig hat es sich erwiesen, wenn das Positivwerkzeug mit einer haftungsvermindernden Beschichtung versehen ist, insbesondere mit einer Beschichtung aus PTFE.

### Kurzbeschreibung der Zeichnung

Die Erfindung wird nachfolgend an Hand der in der Anlage beigefügten Zeichnung weiter verdeutlicht. Es zeigen:

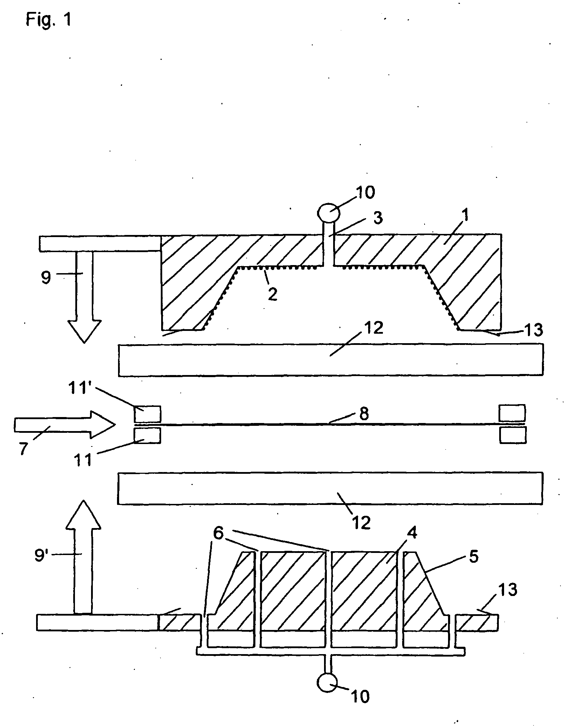

Fig. 1 eine beispielhafte Vorrichtung in längsgeschnittener Darstellung, die zur Durchführung des erfindungsgemäßen Verfahrens geeignet ist.

### Ausführung der Erfindung

Die in Fig. 1 gezeigte. Vorrichtung zur Durchführung des erfindungsgemäßen Verfahrens umfasst ein dreidimensional profiliertes Negativwerkzeug 1 mit einer negativen Oberflächennarbung 2, das an einer am Fertigteil nicht sichtbaren Stelle des Profils von einem Kanal 3 durchdrungen ist, ein damit in Eingriff bringbares, dreidimensional profiliertes Positivwerkzeug 4 mit einer glatten. Oberfläche 5, die von im wesentlichen gleichmäßig verteilten Steuerkanälen 6 durchdrungen ist, eine erste Hilfseinrichtung 7, durch die eine thermoplastische Kunststofffolie 8 erwärmbar und in den Zwischenraum zwischen dem Negativ- und Positivwerkzeug 1, 4 einbringbar ist, eine zweite Hilfseinrichtung 9, 9', durch die der Abstand der beiden Werkzeuge 1, 4 veränderbar ist und eine dritte Hilfseinrichtung, durch die die Kanäle 3 und Steuerkanäle 6 mit der Atmospäre, einem Vakuum und/oder einer Quelle 10 für ein druckbeaufschlagbares Strömungsmittel verbindbar sind. Die Kunststofffolie 8 ist in der dargestellten Verfahrenssituation randseitig in einem Spannrahmen 11,11' festgelegt, der in dem Zwischenraum der einen Abstand von einander aufweisenden Werkzeuge 1, 4 angeordnet ist. Oberhalb und unterhalb des Spannrahmens sind Heizstrahler 12 angeordnet, die gegen die Ober- und Unterseite der Kunststofffolie gerichtet sind und deren zügige Erwärmung auf Verformungstemperatur bewirken. Um beim Erreichen der Umformtemperatur eine unkontrollierte Verformung der Kunststofffolie durch deren Eigengewicht zu verhindern, kann darunter ein nicht dargestellter Blaskasten angeordnet werden, der aus daran angebrachten Zugängen mit Druckluft gespeist wird und der die Kunststoffolie auf einem Luftkissen abstützt.

Das Positivwerkzeug kann auf der mit der Kunststofffolie 8 in Berührung gelangenden Fläche 5 mit einer haftungsvermindernden Beschichtung versehen sein, bevorzugt mit einer Beschichtung aus PTFE.

### Zur Funktion ist folgendes auszuführen:

Im Anschluss an das Erreichen der Umformtemperatur werden die Heizstrahler aus der gezeigten Position seitlich herausgefahren, bis sich nur noch die in dem Spannrahmen randseitig gehaltene Kunststofffolie im Zwischenraum zwischen dem Negativ- und Positivwerkzug 1, 4 befindet. Die beiden Werkzeuge 1, 4 werden relativ zu der Kunststofffolie 8 auf diese zu bewegt, wobei angestrebt wird, dass die Kunststofffolie 8 zunächst auf dem Positivwerkzeug 4 zur Ablage gelangt, um eine faltenfreie und räumlich exakte Positionierung auf dessen Oberfläche 5 zu gewährleisten. Die Kunststofffolie wird anschließend durch das Anlegen von Vakuum an den Steuerkanälen 6 fixiert.

Die so fixierte Kunststofffolie 8 wird anschließend mittels des Positivwerkzeuges 4 in das Negativwerkzeug 1 überführt, bis sich die randseitigen Ringdichtungen 13 dichtend auf die ihnen jeweils zugewandten Oberflächen der Kunststofffolie 8 anlegen. Das im Zwischenraum vorhandene Restvolumen an Luft wird über den Kanal 3 in die Atmospäre entlassen oder abgesaugt. Ferner ist es möglich, mehrere derartige Kanäle 3 an den später nicht sichtbaren Stellen des Negativwerkzeugs 1 vorzusehen, insbesondere in zurückliegenden Bereichen. Anbringungspositionen, die später ausgeschnitten werden, sind besonders geeignet. Sie finden sich im Bereich von Armaturentafeln, Sonnenblenden oder anderen Innenraumverkleidungen für die dort einzusetzenden Armaturen in sehr großer Zahl.

Die Steuerkanäle 6 werden beim Erreichen der Endposition der Werkzeuge 1, 4 mit unter einem Überdruck von 2 bis 4 bar stehender Druckluft beaufschlagt, die sich über die gesamte Unterseite der Kunststofffolie 8 gleichmäßig verteilt. Der auf die Kunststofffolie 8 ausgeübte Thermoformprozess wird dadurch abgeschlossen und die Oberseite der plastisch verformbaren Kunststofffolie 8 in die Negativnarbung 2 des Negativwerkzeugs 1 durchgehend eingepresst. Das Musterungsbild der Negativnarbung 2 wird dabei vollständig auf die Oberfläche der thermogeformten Kunststofffolie 8 übertragen.

Im Anschluss daran werden die Werkzeuge 1, 4 geringfügig zurückbewegt, wobei sich die Kunststofffolie 8 durch eine PTFE - Beschichtung der Oberflächen 5 leicht von diesen löst. Durch die Kanäle 3 und die Steuerkanäle 6 wird nun Druckluft zum Abblasen der Kunststofffolie aus dem Negativwerkzeug 1 in den dahinter gebildeten Spalt gespühlt , wobei sich zugleich eine Abkühlung der Kunststofffolie 8 und als Folge davon eine mechanische Stabilisierung der thermogeformten und mit einer oberseitigen Ledernarbung versehenen Kunststofffolie 8 ergibt. Die Werkzeuge 1, 4 können anschließend in die gezeigte Position zurückbewegt werden. Die Kunststofffolie 8 lässt sich dann von Hand oder mittels Kettentransportsystem u.a. seitlich aus dem Zwischenraum der Werkzeuge 1, 4 entnehmen bzw. herausfahren und durch eine noch unverformte Kunststofffolie 8 ersetzen.

## Patentansprüche

1. Verfahren zur Herstellung einer thermogeformten und mit einer Oberflächennarbung versehenen Kunststofffolie, bei dem eine bis zur plastischen Verformbarkeit erwärmte, ebene Kunststofffolie (8) aufeinander folgend thermogeformt, mit der Oberflächennarbung versehen und durch anschließende Abkühlung verfestigt wird, wobei die auf ihre Umformtemperatur erwärmte Kunststofffolie (8) an ein auf ihre Umformtemperatur erwärmtes Positivwerkzeug (4) angeblasen und von diesem bis zum oberflächen bündigen Anliegen angesogen wird, wobei die Kunststofffolie (8) mittels des Positivwerkzeugs (4) in ein erwärmtes Negativwerkzeug (1) überführt wird mit einer Oberfläche, die zusätzlich die Oberflächennarbung in negativer Form enthält, wobei der verbleibende Zwischenraum zwischen der Oberflächennarbung und der Kunststofffolie (8) druckentlastet wird und wobei die Kunststofffolie (8) durch eine Beaufschlagung Ihrer Rückseite mit einem aus dem Positivwerkzeug austretenden, druckbeauschlagten Strömungsmittel (1) in die Oberflächennarbung eingepresst und vorderseitig mit der Oberflächennarbung versehen wird, **dadurch gekennzeichnet, dass** ein unporöses Negativwerkzeug (1) mit einer Temperatur von 40 - 100°C verwendet wird, dass der Zwischenraum zwischen dem Negativwerkzeug (1) und der Kunststofffolie (8) über zumindest einen Kanal mit einem Durchmesser von 2 bis 50 mm druckentlastet wird, dass das Positivwerkzeug (4) geringfügig von der Rückseite der Kunststofffolie abgehoben wird und dass die Kunststofffolie durch Einleiten eines kühlen Strömungsmittels in den so gebildeten Spalt auf eine unter der Umformtemperatur liegende Temperatur abgekühlt und nachfolgend entnommen wird.

2. Verfahren nach Anspruch 1, **dadurch gekennzeichnet, dass** die Kunststofffolie (8) während der Durchführung des Verfahrens in einem Spannrahmen (11, 11') eingespannt und darin erwärmt, thermogeformt und geprägt wird.

3. Verfahren nach Anspruch 2, **dadurch gekennzeichnet, dass** die Kunststofffolie (8) nach der Überführung in das Negativwerkzeug (1) randseitig gegenüber dem Negativwerkzeug (1) und dem Positivwerkzeug (4) abgedichtet wird und dass der verbleibende Zwischenraum zwischen dem Negativwerkzeug (1) und der Kunststofffolie (8) über zumindest einen Kanal (3) evakuiert wird.

4. Verfahren nach Ansprüche 3, **dadurch gekennzeichnet, dass** die Kunststofffolie (8) durch Luft gekühlt wird, die durch den Kanal (3) in den Zwischenraum zwischen der Oberflächennarbung und der Kunststofffolie einspeisbar ist.

5. Verfahren nach einem der Ansprüche 1 bis 4, **dadurch gekennzeichnet, dass** das Negativwerkzeug (1) auf eine Temperatur von 60 bis 80 °C erwärmt wird.

6. Verfahren nach einem der Ansprüche 1 bis 5, **dadurch gekennzeichnet, dass** das Positivwerkzeug (4) auf eine Temperatur von 170 bis 220 °C erwärmt wird.

7. Vorrichtung zur Durchführung des Verfahrens nach einem der Ansprüche 1 bis 6, umfassend ein dreidimensional profiliertes, Negativwerkzeug (1) mit einer negativen Oberflächennarbung (2), ein damit in Eingriff bringbares, dreidimensional profiliertes, beheizbares Positivwerkzeug (4) mit einer glatten Oberfläche (5), die von im wesentlichen gleichmäßig verteilten Steuerkanälen (6) durchdrungen ist, eine erste Hilfseinrichtung (7), durch die eine thermoplastische Kunststofffolie (8) erwärmbar und in den Zwischenraum zwischen dem Negativ- und Positivwerkzeug (1, 4) einbringbar ist, eine zweite Hilfseinrichtung (9), durch die der Abstand der beiden Werkzeuge (1, 4) veränderbar ist und eine dritte Hilfseinrichtung (10), durch die die Steuerkanäle (6) mit der Atmosphäre, einem Vakuum und/oder einer Quelle für ein druckbeaufschlagbares Strömungsmittel verbindbar sind, **dadurch gekennzeichnet, dass** das Negativwerkzeug (1) eine unporöse Oberfläche hat und an zumindest einer Stelle des Profils von wenigstens einem Kanal (3) mit einem Durchmesser von 2 bis 50 mm durchdrungen ist und dass durch die dritte Hilfseinrichtung (10) zusätzlich der Kanal (3) mit der Atmosphäre, einem Vakuum und/oder einer Quelle für ein druckbeaufschlagbares Strömungsmittel verbindbar ist.

8. Vorrichtung nach Anspruch 7, **dadurch gekennzeichnet, dass** das Negativwerkzeug (1) und das Positivwerkzeug (4) miteinander verpressbar sind.

9. Vorrichtung nach Anspruch 8, **dadurch gekennzeichnet, dass** das Negativwerkzeug (1) und das Positivwerkzeug (4) im miteinander verpressten Zustand verriegelbar sind.

10. Vorrichtung nach einem der Ansprüch 7 bis 9, **dadurch gekennzeichnet, dass** das Positivwerkzeug (4) mit einer haftungsvermindernden Beschichtung versehen ist.

11. Vorrichtung nach Anspruch 10, **dadurch gekennzeichnet, dass** die Beschichtung aus PTFE besteht.

12. Vorrichtung nach einem der Ansprüche 7 bis 12, **dadurch gekennzeichnet, dass** der Kanal (3) an der am weitesten zurückliegenden Stelle der mit der Negativnarbung versehen Oberfläche des Negativwerkzeugs (1) mündet.

13. Vorrichtung nach einem der Ansprüche 7 bis 13, **dadurch gekennzeichnet, daß** der Kanal (3) an einer im Fertigteil verdeckten oder ausgeschnittenenen Stelle mündet.

## Claims

1. A method of producing.a thermoformed plastics film provided with a surface grain, in which method a flat plastics film (8) heated until plastic deformability is achieved is successively thermoformed, provided with the surface grain and strengthened by subsequent cooling, wherein the plastics film (8) heated to its forming temperature is blown onto a positive tool (4) heated to its forming temperature and is sucked in by the latter until it bears flush against the surface, wherein the plastics film (8) is transferred by means of the positive tool (4) into a heated negative tool (1) having a surface which additionally contains the surface grain in a negative form, wherein the remaining space between the surface grain and the plastics film (8) is pressure-relieved and wherein the plastics film (8), by its rear side being acted upon by a pressurized flow medium (1) issuing from the positive tool, is pressed into the surface grain and is provided with the surface grain on the front side, **characterized in that** a non-porous negative tool (1) at a temperature of 40-100°C is used, **in that** the space between the negative tool (1) and the plastics film (8) is pressure-relieved via at least one passage having a diameter of from 2 to 50 mm, **in that** the positive tool (4) is lifted slightly from the rear side of the plastics film, and **in that** by introduction of a cool flow medium into the gap thus formed, the plastics film is cooled to a temperature below the forming temperature and is subsequently removed.

2. A method according to claim 1, **characterized in that** the plastics film (8) is clamped in place in a clamping frame (11, 11') while the method is being carried out and is heated therein, thermoformed and embossed.

3. A method according to claim 2, **characterized in that** the plastics film (8), after the transfer into the negative tool (1), is sealed at the margins relative to the negative tool (1) and the positive tool (4), and **in that** the remaining space between the negative tool (1) and the plastics film (8) is evacuated via at least one passage (3).

4. A method according to claim 3, **characterized in that** the plastics film (8) is cooled by air which is fed through the passage (3) into the space between the surface grain and the plastics film.

5. A method according to any one of claims 1 to 4, **characterized in that** the negative tool (1) is heated to a temperature of from 60 to 80°C.

6. A method according to any one of claims 1 to 5, **characterized in that** the positive tool (4) is heated to a temperature of from 170 to 220°C.

7. An apparatus for carrying out the method according to any one of claims 1 to 6, comprising a three-dimensionally profiled negative tool (1) having a negative surface grain (2), a three-dimensionally profiled, heatable positive tool (4) which can be brought into engagement with the negative tool (1) and has a smooth surface (5), through which essentially uniformly distributed control passages (6) pass, a first auxiliary device (7), by means of which a thermoplastic film (8) can be heated and introduced into the space between the negative and the positive tool (1, 4), a second auxiliary device (9), by means of which the distance between the two tools (1, 4) can be varied, and a third auxiliary device (10), by means of which the control passages (6) can be connected to the atmosphere, a vacuum and/or a source for a flow medium that can be pressurized, **characterized in that** the negative tool (1) has a non-porous surface, and at least one passage (3) having a diameter of from 2 to 50 mm passes through the negative tool (1) at at least one point of the profile, and **in that**, by means of the third auxiliary device (10), the passage (3) can be additionally connected to the atmosphere, a vacuum and/or a source for a flow medium that can be pressurized.

8. An apparatus according to claim 7, **characterized in that** the negative tool (1) and the positive tool (4) can be pressed together.

9. An apparatus according to claim 8, **characterized in that** the negative tool (1) and the positive tool (4) can be locked in the pressed-together state.

10. An apparatus according to any one of claims 7 to 9, **characterized in that** the positive tool (4) is provided with an adhesion-reducing coating.

11. An apparatus according to claim 10, **characterized in that** the coating is made of PTFE.

12. An apparatus according to any one of claims 7 to 12, **characterized in that** the passage (3) opens out at that point of the surface, provided with the negative grain, of the negative tool (1) which lies furthest to the rear.

13. An apparatus according to any one of claims 7 to 13, **characterized in that** the passage (3) opens out at a point which is concealed or cut out in the finished part.

## Revendications

1. Procédé pour fabriquer un film plastique thermoformé et pourvu d'un grainage de surface, dans lequel un film plastique (8) plan, réchauffé jusqu'à la déformabilité plastique, est successivement thermoformé, doté du grainage de surface et durci par un refroidissement consécutif, le film plastique (8) réchauffé jusqu'à sa température de déformation étant placé par soufflage sur un outil positif (4) réchauffé à sa température de déformation et étant aspiré par celui-ci jusqu'à ce qu'il arrive au niveau de la surface, le film plastique (8) étant transféré au moyen de l'outil positif (4) dans un outil négatif (1) réchauffé avec une surface qui contient en supplément le grainage de surface dans une forme négative, l'espace intermédiaire restant entre le grainage de surface et le film plastique (8) étant soulagé en pression et le film plastique (8) étant enfoncé par une sollicitation de sa face arrière par un moyen d'écoulement (1) sortant de l'outil positif dans le grainage de surface et étant doté côté avant du grainage de surface, **caractérisé en ce qu'**un outil négatif (1) non poreux est utilisé à une température de 40-100°C, **en ce que** l'espace intermédiaire entre l'outil négatif (1) et le film plastique (8) est déchargé en pression au moyen d'au moins un conduit présentant un diamètre de 2 à 50 mm, **en ce que** l'outil positif (4) est soulevé légèrement de la face arrière du film plastique et **en ce que** le film plastique est refroidi par l'introduction d'un moyen d'écoulement frais dans la fente ainsi formée jusqu'à une température située au-dessous de la température de déformation et est ensuite enlevé.

2. Procédé selon la revendication 1, **caractérisé en ce que** le film plastique (8) est serré pour la mise en oeuvre du procédé dans un cadre de serrage (11, 11') et y est réchauffé, thermoformé et gaufré.

3. Procédé selon la revendication 2, **caractérisé en ce que** le film plastique (8) est rendu étanche après le transfert dans l'outil négatif (1) côté bordure par rapport à l'outil négatif (1) et à l'outil positif (4) et **en ce que** l'espace intermédiaire restant entre l'outil négatif (1) et le film plastique (8) est soumis à un vide par au moins un conduit (3).

4. Procédé selon la revendication 3, **caractérisé en ce que** le film plastique (8) est refroidi par de l'air qui peut être injecté par le conduit (3) dans l'espace intermédiaire entre le grainage de surface et le film plastique.

5. Procédé selon l'une quelconque des revendications 1 à 4, **caractérisé en ce que** l'outil négatif (1) est réchauffé jusqu'à une température de 60 à 80°C.

6. Procédé selon l'une quelconque des revendications 1 à 5, **caractérisé en ce que** l'outil positif (4) est réchauffé jusqu'à une température de 170 à 220°C.

7. Dispositif pour la mise en oeuvre du procédé selon l'une quelconque des revendications 1 à 6, comprenant un outil négatif (1) profilé en trois dimensions avec un grainage de surface (2) négatif, un outil positif (4), profilé en trois dimensions, pouvant être chauffé, pouvant être amené en prise avec l'outil négatif et ayant une surface (5) lisse, qui est traversée par des conduits de commande (6) disposés de façon sensiblement régulière, un premier dispositif auxiliaire (7), par lequel un film plastique (8) thermoplastique peut être réchauffé et peut être introduit dans l'espace intermédiaire entre l'outil négatif et l'outil positif (1, 4), un second dispositif auxiliaire (9), par lequel l'espacement des deux outils (1, 4) peut être modifié, et un troisième dispositif auxiliaire (10), par lequel les conduits de commande (6) peuvent être reliés à l'atmosphère, un vide et/ou une source pour un moyen d'écoulement pouvant être sollicité par pression, **caractérisé en ce que** l'outil négatif (1) a une surface non poreuse et est traversé en au moins un endroit du profilé par au moins un conduit (3) d'un diamètre de 2 à 50 mm et **en ce que** en supplément le conduit (3) peut être relié par le troisième dispositif auxiliaire (10) à l'atmosphère, un vide ou une source pour un moyen d'écoulement pouvant être sollicité par pression.

8. Dispositif selon la revendication 7, **caractérisé en ce que** l'outil négatif (1) et l'outil positif (4) peuvent être comprimés l'un avec l'autre.

9. Dispositif selon la revendication 8, **caractérisé en ce que** l'outil négatif (1) et l'outil positif (4) peuvent être verrouillés dans l'état comprimé l'un avec l'autre.

10. Dispositif selon l'une quelconque des revendications 7 à 9, **caractérisé en ce que** l'outil positif (4) est doté d'un revêtement réduisant l'adhérence.

11. Dispositif selon la revendication 10, **caractérisé en ce que** le revêtement est à base de PTFE.

12. Dispositif selon l'une quelconque des revendications 7 à 12, **caractérisé en ce que** le conduit (3) débouche à l'emplacement le plus reculé de la surface, dotée du grainage négatif, de l'outil négatif (1).

13. Dispositif selon l'une quelconque des revendications 7 à 13, **caractérisé en ce que** le conduit (3) débouche en un emplacement revêtu ou découpé dans la pièce finie.
